**Europäisches Patentamt**

(19) **European Patent Office**

**Office européen des brevets**

(11) Numéro de publication : **0 066 581**
**B1**

(12) **FASCICULE DE BREVET EUROPÉEN**

(45) Date de publication du fascicule du brevet :
04.03.87

(51) Int. Cl.⁴ : **A 01 N 3/00**, A 01 C 1/00,
C 12 M 1/16

(21) Numéro de dépôt : **81903235.0**

(22) Date de dépôt : **10.12.81**

(86) Numéro de dépôt international :
**PCT/FR 81/00160**

(87) Numéro de publication internationale :
**WO/8201979 (24.06.82 Gazette 82/16)**

(54) DISPOSITIF CONDITIONNEUR ET SON PROCEDE DE MISE EN OEUVRE.

(30) Priorité : **11.12.80 FR 8026341**

(43) Date de publication de la demande :
**15.12.82 Bulletin 82/50**

(45) Mention de la délivrance du brevet :
**04.03.87 Bulletin 87/10**

(84) Etats contractants désignés :
**AT CH DE FR GB LI LU NL SE**

(56) Documents cités :
**FR-A- 2 350 778**
**US-A- 2 192 939**
**US-A- 3 065 150**
**US-A- 3 557 491**
**US-A- 3 684 660**

(73) Titulaire : **PIQUEPAILLE, Pierre**
**5 Allée des Bathes**
**F-91940 Les Ulis (FR)**

**WERTHEIMER, Dominique**
**5 Allée des Bathes**
**F-91940 Les Ulis (FR)**

(72) Inventeur : **PIQUEPAILLE, Pierre**
**5 Allée des Bathes**
**F-91940 Les Ulis (FR)**
Inventeur : **WERTHEIMER, Dominique**
**5 Allée des Bathes**
**F-91940 Les Ulis (FR)**

(74) Mandataire : **de Boisse, Louis et al**
**CABINET DE BOISSE 37, Avenue Franklin D. Roosevelt**
**F-75008 Paris (FR)**

## Description

### Domaine technique

La présente invention concerne, sous sa forme la plus générale, un dispositif conditionneur et son procédé de mise en œuvre, conjointement destinés à assurer la conservation et/ou la transformation d'objets variés par leur maintien ordonné et stable, mais réversible, dans des conditions déterminées, avec possibilité permanente d'intervention, selon des modalités variables, optionnelles et non exclusives.

Dans l'une de ses multiples applications particulières, exposée ci-après en tant que base de référence exemplaire, l'invention concerne un secteur de la technique qui peut être indiqué par la double définition de la branche d'activité et de la nature desdits objets, et précisé par la considération d'un certain type de problèmes. A cet égard, l'invention propose un dispositif conditionneur et son procédé de mise en œuvre, tels qu'ils peuvent être utilisés dans le cadre des activités de recherche, fondamentales ou appliquées, qui portent sur les semences végétales, par exemple celles de céréales comme le blé ou l'orge, et qui s'intéressent à leurs propriétés spontanées ou provoquées, ainsi qu'à celles des jeunes plantes qui en dérivent, notamment pour la réalisation d'essais de germination.

Les propriétés qui viennent d'être évoquées sont nombreuses, de nature diverse et d'intensité inégale. De plus, elles présentent souvent une importante variabilité qui est due à des causes multiples et généralement interactives. Certaines de ces causes sont propres au matériel végétal, alors que d'autres lui sont extérieures ou étrangères. Aussi, les recherches effectuées nécessitent souvent des moyens permettant de repérer individuellement les objets végétaux étudiés, et de définir précisément les conditions particulières auxquelles chacun d'eux est soumis, sans que cela compromette la possibilité d'intervenir à tout moment au niveau individuel de ces objets et de ces conditions.

Dans ces circonstances exigeantes et complexes, la sûreté et l'adaptabilité sont des qualités essentielles parmi celles qui sont attendues des moyens nécessaires.

### Technique antérieure

Dans le secteur qui a été précédemment indiqué et précisé, l'état actuel de la technique comporte divers moyens principaux, sur la base desquels une diversification formelle a été développée. En ce qui concerne notamment les essais de germination, certains des dispositifs et des procédés existants sont homologués et normalisés nationalement, ainsi que suivant les indications de l'organisme dénommé « International Seed Testing Association » (I.S.T.A.). Cet organisme a établi des Règles Internationales pour les Essais de Semences, dont le texte original et diverses traductions sont distribués par le Secrétariat de l'I.S.T.A., Box 68 — N-1432 — AS NLH (Norvège).

Afin de fournir une base de comparaison pour la présente invention, les principaux moyens actuellement disponibles pour la réalisation d'essais de germination vont maintenant faire l'objet d'une description accompagnée de remarques concernant leurs avantages et leurs inconvénients respectifs. Il va de soi qu'un tel exposé ne saurait être considéré comme exhaustif.

Avant leur véritable mise en germination, les semences subissent une préparation préalable, comportant généralement un échantillonnage statistique ainsi que d'éventuels traitements spécifiques, tels que le trempage, la lixiviation, ou la scarification par une solution d'acide sulfurique. Ces traitements sont effectués indépendamment des substrats de germination.

Les semences ainsi préparées sont ensuite déposées, selon un arrangement généralement défini, au contact d'un substrat hydraté, principalement destiné à assurer leur maintien et leur approvisionnement en eau, puis ces mêmes fonctions pour les jeunes plantes issues de leur germination. Ce substrat est très souvent placé dans un récipient qui sert en même temps de moyen vecteur, de conteneur et, s'il est clos, de moyen permettant de limiter l'évaporation, ce qui interfère avec l'aération. L'ensemble constitue un germoir.

Dans certains cas, les semences sont prélevées et transférées une à une, directement à la main ou par l'intermédiaire d'instruments tels que des pinces métalliques, ce qui est un procédé long et délicat n'assurant pas pour autant un arrangement régulier. Lorsque cela est possible, ces opérations sont effectuées à l'aide d'appareils de mise en place automatique, notamment des têtes de comptage par le vide. De tels appareils permettent un transfert groupé et un positionnement précis des semences, de manière sûre et rapide. Mais, sans certaines précautions, ils tendent à opérer une sélection lorsque les semences sont de forme ou de dimensions variables.

Il existe déjà plusieurs types de germoirs qui diffèrent par la nature et les caractéristiques du substrat, par celles du conteneur éventuel, et par les relations de position entre les semences et le substrat. Ces relations sont essentiellement établies selon deux modes qui sont définis dans la nomenclature normalisée de l'I.S.T.A. Lorsque les semences sont déposées sur le substrat, cela correspond à la norme dite T (« Top »), alors que leur incorporation dans l'épaisseur du substrat répond à la norme dite B (« Between »).

Les divers substrats actuellement utilisés pour la confection de germoirs peuvent être classés en trois catégories dont les principaux représentants sont les suivants :

substrats en agrégats ou particulaires (terre, sable, vermiculite, perlite), utilisables, à volonté, selon la norme T ou selon la norme B ;

substrats colloïdaux (gels d'agar-agar, gels de silice), normalement utilisés selon la seule norme T ;

substrats poreux ou capillaires (porcelaine non vernissée, ouate de coton, textiles, papier buvard), dont le premier exemple cité est obligatoirement employé selon la norme T, les trois autres étant utilisables, à volonté, selon la norme T ou selon la norme B.

Parmi les substrats indiqués ci-dessus, seuls la terre, le sable et le papier buvard sont réellement homologués pour les analyses officielles, les autres étant surtout utilisés dans certains cas particuliers.

Milieu naturel de la germination pour la plupart des semences, la terre est aussi le substrat de référence. Sa grande qualité au plan physiologique est surtout due aux éléments nutritifs et au complexe argilo-humique qui entrent dans sa composition. Etant de type colloïdal, ce dernier favorise à la fois la rétention de l'eau et sa disponibilité pour les racines. Par contre, l'extrême variabilité de la terre, en ce qui concerne notamment sa structure et sa composition, conduit à substituer un savoir-faire empirique à la définition de normes précises.

Les trois autres substrats cités, particulaires, ont une structure et une composition plus faciles à définir et à normaliser. Cependant, leur structure particulière stricte, en l'absence de constituants colloïdaux, entraîne simultanément une limitation de la quantité d'eau disponible, la mobilité des particules en surface, et leur tendance au tassement en profondeur. Quant à la vermiculite, elle présente de surcroît l'inconvénient majeur de sa forte teneur en ions potassium.

Globalement, les substrats en agrégats ou particulaires assurent aux semences et aux jeunes plantes une immobilisation et un approvisionnement en eau qui s'avèrent corrects en position de norme T, et parfaits en position de norme B. Mais ils présentent l'inconvénient commun de ne pas permettre en permanence des opérations portant sur l'ensemble du matériel végétal, notamment l'observation continue du système racinaire.

Les deux substrats colloïdaux cités sont, par nature, favorables à la rétention d'une importante quantité d'eau et à son absorption par les tissus végétaux placés à leur contact. Grâce à leur transparence, ils permettent aussi une observation intégrale et suivie des jeunes plantes. Mais ils sont très sensibles à la dessication, surtout les gels de silice dont la préparation est, par ailleurs, assez longue et délicate. Les gels d'agar-agar favorisent le développement des micro-organismes.

Parmi les substrats poreux ou capillaires, la porcelaine non vernissée présente comme avantages sa manipulation facile et sa faculté d'être nettoyée, stérilisée et utilisée de nombreuses fois. Cependant, l'extrême faiblesse de son pouvoir hydratant et de son aptitude à l'immobilisation des semences, et surtout des jeunes plantes, la rend peu utilisable.

La ouate de coton immobilise mal les semences, surtout selon la norme T. Le maintien des jeunes plantes est résistant, à tel point que cela devient un inconvénient si on veut les prélever sans dommages. Ce substrat constitue une réserve d'eau convenable, mais il est malaisé d'égaliser son épaisseur, ce qui est une cause de variabilité pour l'approvisionnement en eau du matériel végétal et, par conséquent, pour la germination des semences comme pour le développement des jeunes plantes.

Les textiles immobilisent très faiblement les semences et assez mal les jeunes plantes, sauf s'ils possèdent des mailles suffisamment grandes pour permettre le passage des racines, ce qui peut devenir un inconvénient lorsqu'il est nécessaire de prélever les plantes. Ils assurent un approvisionnement en eau régulier, mais leur capacité de réserve est faible et ils se dessèchent rapidement. Il faut cependant noter les avantages procurés par les mèches plongeant dans un réservoir d'eau que comportent les dispositifs appelés « bacs Jacobsen ».

Le substrat capillaire le plus largement utilisé dans les laboratoires est le papier, communément qualifié de « buvard », qui est non encollé, non blanchi, chimiquement pur, inerte, et souvent distribué sous forme stérile. De manière courante, il s'agit de disques qui sont empilés dans le fond d'une « boîte de Petri » et imbibés d'eau à refus, un tel procédé étant assez peu précis, y compris dans sa définition normalisée. Dans certains laboratoires, pour des essais de germination portant sur des échantillons groupés ou de fort effectif, le papier « buvard » est utilisé sous forme de feuilles rectangulaires pouvant être de grandes dimensions, parfois déposées dans des tiroirs de faible hauteur, servant de conteneurs et intégrés à des armoires parfois climatisées.

Quelle que soit la forme du papier « buvard » utilisé, les semences éventuellement prétraitées sont, dans certains cas, simplement déposées à la surface de ce substrat préalablement imbibé d'eau, selon la norme de l'I.S.T.A. dite TP (« Top paper »). Les principaux avantages de ce dispositif sont l'accessibilité permanente du matériel végétal, la facilité d'emploi et le faible coût du substrat. Ses inconvénients majeurs sont la grande mobilité des objets végétaux, surtout celle des jeunes plantes en raison de l'enchevêtrement de leurs racines, l'approvisionnement en eau uniquement inférieur et donc limité, la faiblesse de la réserve hydrique, et la forte tendance à l'évaporation. Pour compenser cette dernière, il est souvent nécessaire d'ajouter une quantité connue d'eau au substrat, de manière fréquente, ce qui constitue une activité prenante n'assurant pas pour autant une hydratation régulière du matériel végétal.

Diverses améliorations de la technique précédente consistent à déposer les semences entre deux épaisseurs de papier « buvard », selon la norme de l'I.S.T.A. dite BP (« Between Paper »). Les principales variantes formelles du dispositif de base sont le rouleau, la feuille repliée, et la feuille plissée. Un développement de cette dernière forme est le dispositif en poche à usage unique réalisé par la Firme « Northrup King and Co » (Minneapolis, U.S.A.). Un tel dispositif présente divers avantages qui sont le maintien des jeunes plantes par leur racine principale, l'amélioration de la réserve et du mode de distribution de l'eau, l'accessibilité presque intégrale des jeunes plantes, en particulier pour leur observation continue, et la possibilité de l'orientation verticale du dispositif, favorable au développement normal. On peut cependant noter la relative mobilité des semences, la tendance au déchirement de la charnière du pli portant les jeunes plantes, et le fait que ces dernières sont maintenues en position relative mais non prémunies contre des mouvements de balancement dans le plan de la poche.

Outre les avantages et les inconvénients particuliers qui sont liés à la nature même des divers substrats et à leurs propriétés, il en existe qui dépendent de leurs relations de position avec les objets végétaux qu'ils portent, et des interactions qu'ils peuvent présenter avec leurs éventuels conteneurs.

De manière générale, l'agencement selon la norme T permet d'accéder presque intégralement aux semences et complètement à la partie aérienne des jeunes plantes provenant de la germination, en excluant parfois les racines lorsqu'elles peuvent pénétrer dans le substrat, sauf en ce qui concerne leur observation continue en cas de transparence de ce substrat. Mais un tel agencement entraîne souvent, notamment avec les substrats consistants et non pénétrables comme le papier « buvard », un maintien presque nul ou faible des objets végétaux, surtout pour les semences non germées, la limitation et l'évaporation de l'eau disponible, surtout si le substrat est de faible épaisseur et étendu, et la restriction de l'approvisionnement en eau des objets végétaux, en raison du caractère unilatéral de leur contact avec le substrat.

Globalement, les dispositifs existants dont l'agencement répond à la norme B assurent de meilleure façon le maintien des semences et des jeunes plantes, leur contact avec le substrat, la mise en réserve et la redistribution régulière de l'eau. Cependant, l'accès aux semences et aux parties incorporées des jeunes plantes est difficile, et parfois destructeur pour les objets végétaux ou perturbant pour les conditions expérimentales. Par rapport aux substrats particulaires ou en agrégats, ou colloïdaux en ce qui concerne les racines, les substrats capillaires que sont la ouate de coton, les textiles, et le papier « buvard », permettent un meilleur accès au matériel végétal incorporé, en raison de leur aptitude à être réversiblement démontés. Mais l'approche elle-même tend à perturber l'arrangement de ce matériel végétal.

Outre l'eau, d'autres facteurs ambiants sont, ou peuvent être, nécessaires à la germination et au développement des jeunes plantes, notamment l'air, la lumière et la température. Avec les moyens antérieurs, l'agencement selon la norme B limite l'aération et l'éclairement, surtout avec les substrats compacts et opaques. L'agencement selon la norme T ne présente pas ces inconvénients mais, si le dispositif comporte un conteneur clos et soumis à de brusques variations de température ou d'éclairement, il existe le risque que se réalise spontanément la chaîne réactive suivante : température et/ou lumière variables — évaporation du substrat — condensation sous la paroi supérieure du conteneur — guttation — pourrissement différentiel du matériel végétal — variabilité parasite.

Les multiples insuffisances que comporte la technique antérieure entraînent un accroissement des investissements nécessaires à sa mise en œuvre, en matériel, en équipement, et en travail.

En ce qui concerne le matériel expérimental, plusieurs types de dispositifs doivent souvent être utilisés successivement pour réaliser complètement les essais de germination. Notamment, les éventuels traitements préalables des semences, tels que leur trempage ou leur lixiviation, ne peuvent être effectués qu'indépendamment des germoirs, en raison de la mobilité des semences et/ou du substrat, ce qui multiplie et complique les opérations de transfert, surtout si chacune des semences doit être identifiée. Cela multiplie aussi les moyens accessoires nécessaires.

Il faut souvent d'importants équipements annexes, notamment pour le contrôle et la régulation de l'humidité ambiante, pour tenter de compenser les insuffisances que présentent à cet égard certains dispositifs existants.

De manière générale, l'utilisation des moyens actuellement disponibles pour la réalisation d'essais de germination comporte des manipulations nombreuses, souvent longues, délicates et incertaines. Il en résulte des erreurs et certaines nuisances pour le matériel végétal étudié, ce qui est la source d'une variabilité parasite et mal contrôlée. Mais cela entraîne aussi un travail important, parfois fastidieux ou pénible. Une telle situation conduit les expérimentateurs et les analystes à faire des choix difficiles entre les aspects quantitatifs et qualitatifs des essais, ce qui pose divers problèmes par rapport aux normes à respecter. L'origine principale de telles difficultés est que l'état de la technique antérieure, dans le secteur qui a été indiqué et précisé, se traduit par le fait que la coopération souhaitée des conditions nécessaires est souvent remplacée par leur antagonisme.

US-A-3684660, qui se rapporte à un échantillonneur microbiologique, décrit un récipient, dont le couvercle et le fond sont détachables. Le fond, muni d'une matière adhésive, sert à collecter par contact des microbes et, une fois pourvu de sa population, est fixé au récipient, lequel est alors rempli par le haut d'une culture microbiologique fluide, qui coule sur ces microbes et durcit ensuite. Une gorge latérale de l'enceinte bloque cette culture, une fois celle-ci durcie. Dans cet enseignement, aucun moyen n'apparaît, autorisant de modifier les conditions de culture ou permettant une intervention.

Dans un domaine proche, qui a trait à la germination de semences, il est connu de disperser des semences dans la masse ou sur une face d'un substrat souple, comme un tapis de fibres minérales ou un film plastique, sur ou dans lequel les graines sont maintenues par une matière adhésive (US-A-2 792 939 et US-A-3 557 491). Ces dispositifs conditionneurs sont destinés à être disposés à la surface du sol, l'un d'eux pouvant aussi être enterré, mais à très faible profondeur. Toutefois, malgré leur accès facile, ils ne permettent pas de déterminer (vérifier et/ou provoquer) les conditions au niveau des objets de manière sûre et adaptée, car tous les composants sont irréversiblement liés les uns aux autres, parfois même en étant mélangés, ce qui interdit de les étudier ou traiter séparément et de les replacer ou remplacer.

Exposé de l'invention

La présente invention, sous sa forme la plus générale et telle qu'elle est caractérisée dans les revendications, propose une solution au problème consistant à créer et appliquer un dispositif conditionneur et son procédé de mise en œuvre, ce dispositif et ce procédé étant conjointement destinés à assurer la conservation et/ou la transformation d'objets variés, en permettant de provoquer, révéler, amplifier, préserver, restreindre, masquer, éliminer, analyser, ou utiliser, les propriétés desdits objets et/ou leur variabilité, grâce à des moyens coopérant pour réaliser leur fixation réversible, selon un arrangement déterminé mais révisable, et leur soumission à des conditions définies mais modifiables, avec possibilité permanente d'intervention, selon des modalités sûres, optionelles et non exclusives.

Dans ce cadre et parmi ses multiples applications possibles, l'invention a pour objectif particulier de fournir les moyens d'un dispositif conditionneur et de son procédé de mise en œuvre, tels qu'ils peuvent être utilisés dans les activités de recherche, fondamentales ou appliquées, qui portent sur les semences végétales, par exemple celles de céréales comme le blé ou l'orge, et qui s'intéressent à leurs propriétés spontanées ou provoquées, ainsi qu'à celles des jeunes plantes qui en dérivent, notamment pour la réalisation d'essais de germination, en remédiant à beaucoup des inconvénients que comporte la technique antérieure dans ce secteur précis, tout en réunissant et complétant ses principaux avantages.

Description sommaire des dessins

Aux fins de montrer un exemple de réalisation, l'invention peut être illustrée par des dessins représentant seulement une version simplifiée, laquelle est en l'occurence une des variantes utilisables dans le cadre des essais de germination précédemment évoqués, et convenant notamment pour des échantillons d'effectif limité ou fractionné.

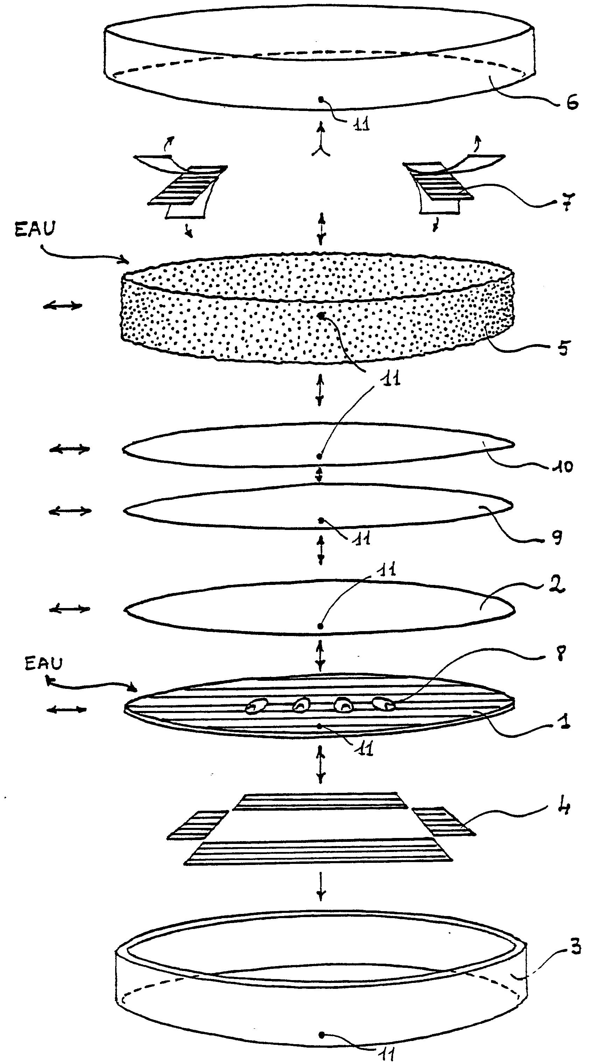

La figure unique annexée représente, en perspective, les divers constituants de ladite version simplifiée, selon un mode graphique en éclaté, lesdits constituants étant séparés et alignés le long de l'axe commun qui définit leur mode d'assemblage. Sur les dessins, les hachures horizontales identifient des constituants adhésifs, tandis que les pointillés permettent de distinguer un constituant réalisé à base d'une matière souple.

De cette manière, ladite figure unique permet de distinguer un support adhésif 1, portant lesdits objets 8, un moyen de protection amovible 2, un moyen tampon 5, des moyens matériels accessoires 9 et 10, un moyen conteneur 3 et 6, et des moyens de sûreté 4, 7 et 11 destinés à la fixation et/ou au repérage.

Manières de réaliser l'invention

Sous sa forme la plus générale, le dispositif conditionneur selon l'invention, destiné à assurer la conservation et/ou la transformation d'objets variés, en permettant de provoquer, révéler, amplifier, préserver, restreindre, masquer, éliminer, analyser, ou utiliser, les propriétés desdits objets et/ou leur variabilité, grâce à des moyens coopérant pour réaliser leur fixation réversible, selon un arrangement déterminé mais révisable, et leur soumission à des conditions définies mais modifiables, avec possibilité permanente d'intervention, selon des modalités sûres, optionnelles et non exclusives, comporte un support adhésif pour lesdits objets et un tampon appliqué contre eux.

Ledit support adhésif est fondamentalement constitué par la manière adhésive utilisée, et peut éventuellement se limiter à elle, quelles que soient la nature, les propriétés particulières, et la configuration géométrique de cette matière.

Mais ledit support adhésif peut aussi comprendre une infrastructure consistante, destinée à porter ou à renforcer ladite matière adhésive. Eventuellement, ladite infrastructure consistante peut présenter une épaisseur et/ou une rigidité lui permettant de faciliter le transport dudit support adhésif.

La surface de ladite matière adhésive peut être nue si ses propriétés le permettent ou si les conditions à réaliser dans le cadre de la mise en œuvre dudit dispositif conditionneur le nécessitent. Mais ledit support adhésif peut comprendre un moyen de protection amovible, destiné à prémunir ladite matière adhésive contre la dessiccation, ou contre tout contact inopportun.

Pour les cas les plus simples de son utilisation, ledit support adhésif peut se limiter aux constituants précédemment indiqués. Mais il peut aussi comporter des composés additifs, sous forme de substances et/ou de particules appropriées, incorporées dans sa masse, tels que des produits de traitement ou des éléments nutritifs par exemple. Lesdits composés additifs, pouvant être sous forme solide, liquide ou gazeuse, sont éventuellement destinés à intervenir dans la réalisation de conditions principales ou complémentaires pour lesdits objets.

Qu'il soit simple ou complexe, ledit support adhésif peut présenter des états particuliers par rapport aux éléments matériels, aux substances, ou aux phénomènes physiques, auxquels il est soumis. Par exemple, il peut être nécessaire qu'il soit transparent à la lumière, soluble, notamment dans l'eau, ou perméable. Par le qualificatif « perméable », on entend que ledit support adhésif peut être librement traversé par des fluides ou des phénomènes physiques déterminés.

Afin de permettre la réalisation de certaines conditions particulières, ledit support adhésif peut éventuellement être discontinu, c'est-à-dire stratifié, morcelé, ou perforé, partiellement ou en totalité.

L'homme de l'art devra déterminer la nature des constituants dudit support adhésif en fonction des propriétés attendues pour la mise en œuvre de l'invention.

Ledit tampon est fondamentalement constitué d'une matière souple, susceptible d'être appliquée contre lesdits objets, en épousant leur forme si cela est nécessaire, et il peut éventuellement se limiter à elle, quelles que soient la nature, les propriétés particulières, et la configuration géométrique de cette matière. Le _ terme « tampon » implique les notions de contact et de pression maintenus, mais de manière qui peut être transitoire ou intermittente.

Cependant, ledit tampon peut aussi comprendre une infrastructure consistante, destinée à porter ou à renforcer ladite matière souple dont il est constitué. Eventuellement, ladite infrastructure consistante peut présenter une épaisseur et/ou une rigidité lui permettant de faciliter le transport dudit tampon.

La surface dudit tampon peut être nue si ses propriétés le permettent, ou si les conditions à réaliser dans le cadre de la mise en œuvre dudit dispositif conditionneur le nécessitent. Mais ledit tampon peut comprendre un moyen de protection amovible, destiné à le prémunir contre toute déperdition, ou contre tout contact inopportun.

Pour les cas les plus simples de son utilisation, ledit tampon peut se limiter aux constituants précédemment indiqués. Mais il peut aussi comporter des composés additifs sous forme de substances et/ou de particules appropriées, incorporées dans sa masse, tels que des produits de traitement ou des éléments nutritifs par exemple. Lesdits composés additifs, pouvant être sous forme solide, liquide ou gazeuse, sont éventuellement destinés à intervenir dans la réalisation de conditions principales ou complémentaires pour lesdits objets.

Eventuellement, ledit tampon peut comporter un moyen matériel incorporé, ou simplement associé à sa surface, afin d'améliorer la mise en réserve et/ou la redistribution d'un agent de conditionnement particulier.

Qu'il soit simple ou complexe, ledit tampon peut présenter des états particuliers par rapport aux éléments matériels, aux substances, ou aux phénomènes physiques, auxquels il est soumis. Par exemple, il peut être nécessaire qu'il soit transparent à la lumière, soluble, notamment dans l'eau, ou perméable pour la libre circulation de fluides ou de phénomènes physiques déterminés.

Afin de permettre la réalisation de certaines conditions particulières, ledit tampon peut éventuellement être discontinu, c'est-à-dire stratifié, morcelé, ou perforé, partiellement ou en totalité.

L'homme de l'art devra déterminer la nature des constituants dudit tampon en fonction des propriétés attendues pour la mise en œuvre de l'invention.

Pour les cas les plus simples de son utilisation, ledit dispositif conditionneur selon l'invention peut se limiter aux constituants précédemment indiqués. Mais, si cela est nécessaire pour la mise en œuvre de l'invention, des moyens matériels accessoires peuvent être interposés entre lesdits objets, portés par ledit support adhésif, et ledit tampon. Ce peuvent être, par exemple, des feuilles d'une matière poreuse ou capillaire, imprégnées de substances nécessaires à la réalisation d'une analyse ou d'un traitement particuliers.

L'homme de l'art devra déterminer la nature desdits moyens matériels accessoires en fonction des propriétés attendues pour la mise en œuvre de l'invention.

Ledit dispositif conditionneur selon l'invention peut être « simple », c'est-à-dire constitué par l'association d'un seul exemplaire dudit support adhésif avec un seul exemplaire dudit tampon, comportant chacun une seule face active pour lesdits objets.

Mais, afin de permettre la constitution d'une structure compacte, ledit dispositif conditionneur peut aussi être réalisé en « dispositif multiple ». Pour cela, un « support adhésif élémentaire » peut posséder deux ou plusieurs faces adhésives actives, chacune d'elles étant porteuse desdits objets et associée à un dit tampon particulier. De même, un « tampon élémentaire » peut posséder deux ou plusieurs faces actives pour lesdits objets, chacune d'elles étant associée à l'une des faces adhésives actives, porteuse desdits objets, d'undit support adhésif particulier. Pour la réalisation d'un tel « dispositif multiple », les divers éléments desdits « supports adhésifs élémentaires » et desdits « tampons élémentaires », constituant des « modules », peuvent être associés en séquences uni-, bi-, ou tridimensionnelles. Il va de soi que lesdits « modules » doivent être compatibles géométriquement.

L'homme de l'art devra déterminer la forme et le mode d'assemblage desdits « modules » en fonction des caractéristiques attendues dudit « dispositif multiple » pour la mise en œuvre de l'invention.

Qu'il soit dedit type « simple » ou « multiple », ledit dispositif conditionneur selon l'invention peut se limiter aux constituants et aux associations précédemment indiqués.

Mais, pour son utilisation rationnelle conformément aux objectifs précédemment énoncés, et notamment pour créer localement des conditions favorables avec sa seule mise en œuvre, indépendamment de tout équipement extérieur, ledit dispositif peut comprendre un conteneur spécial, dans lequel les constituants précédemment indiqués sont placés, et avec lequel ils coopèrent pour réaliser les conditions requises.

Pour la réalisation de certaines conditions locales particulières, par exemple l'homogénéité de l'environnement, pour des essais comparatifs précis, ou pour réduire l'encombrement, ledit conteneur peut ne pas être simple mais complexe, contribuant ainsi à constituer un « dispositif composé ». Il peut notamment s'agir de l'association, en un seul bloc, ou par éléments, de moyens conteneurs élémentaires constituant des compartiments distincts dans ledit « dispositif composé », par exemple sous forme d'alvéoles, de cases, ou de tiroirs. Il va de soi que desdits dispositifs « simples » ou « multiples », de dimensions adaptées, peuvent être intégrés audit « dispositif composé », de telles associations de moyens permettant la réalisation groupée de modèles expérimentaux complexes.

Qu'il soit de type simple ou complexe, ledit conteneur spécial éventuellement compris dans ledit dispositif conditionneur selon l'invention peut, si cela s'avère nécessaire pour la réalisation de certaines conditions locales particulières, par exemple pour modifier les caractéristiques de la lumière ambiante, comporter des composants annexes, déposés au contact de ses parois.

L'homme de l'art devra déterminer la nature, les caractéristiques, et le mode d'assemblage, dudit conteneur spécial et desdits composants annexes, avec les autres constituants dudit dispositif conditionneur, en fonction des conditions locales à créer pour la mise en œuvre de l'invention.

Outre les divers constituants précédemment indiqués, ledit dispositif conditionneur selon l'invention peut comporter des moyens de sûreté, c'est-à-dire de fixation et/ou de repérage, afin de rendre certains desdits constituants solidaires, et/ou pour permettre de définir avec précision l'arrangement relatif desdits constituants, entre eux ou par rapport auxdits objets, de manière éventuellement révisable.

Ainsi, ledit dispositif peut comporter des moyens permettant de fixer réversiblement ledit support adhésif et ledit tampon contre les parois internes dudit conteneur, par exemple à l'aide de moyens adhésifs à deux faces actives, ou de clips.

De même, chacun desdits constituants dudit dispositif conditionneur peut comporter des marques de repérage, telles que des impressions ou des aspérités, ou des moyens s'encastrant les uns dans les autres, tels que des encoches et des moyens en relief, afin qu'il soit possible de noter, ou de stabiliser, la position relative des divers éléments matériels concernés.

L'homme de l'art devra déterminer la nature et les caractéristiques desdits moyens de sûreté en fonction des objectifs visés par la mise en œuvre de l'invention.

Il va de soi que tous lesdits constituants dudit dispositif conditionneur doivent être compatibles, entre eux et par rapport auxdits objets, en ce qui concerne leurs caractéristiques géométriques, physiques, chimiques, et biologiques, compte tenu des objectifs de leur mise en œuvre. Notamment, il peut être nécessaire de réaliser undit dispositif conditionneur totalement stérile, ou indemne de poussières. Il appartiendra à l'homme de l'art de déterminer la nature des matières premières et les moyens de fabrication, à utiliser, en conséquence.

Le procédé pour la mise en œuvre dudit dispositif conditionneur selon l'invention est destiné à coopérer avec celui-ci, de manière à tirer parti de toutes ses potentialités d'ouvrage, par leur sélection, leur modulation, et/ou leur combinaison, dans l'espace et/ou dans le temps.

Ladite mise en œuvre est destinée à obtenir (permettre, favoriser, ou provoquer) la conservation (maintenance, préservation, et/ou stockage), et/ou la transformation (spontanée, favorisée, ou provoquée) d'objets variés (divers et/ou changeants), maintenus, selon des modalités variables (diverses et/ou modifiables) relativement à l'espace, au temps et/ou à l'association des moyens utilisés, sous des conditions déterminées mais également variables (diverses et/ou modifiables). Comme ledit dispositif conditionneur auquel il se rapporte, ledit procédé comporte de nombreuses options non exclusives.

Dans le cadre des précédentes définitions, ledit procédé pour la mise en œuvre dudit dispositif conditionneur selon l'invention comporte fondamentalement les étapes suivantes : a) mise en place desdits objets sur ledit support adhésif ; b) incorporation éventuelle d'agents de conditionnement dans ledit tampon ; c) application dudit tampon, éventuellement traité à l'étape b), contre lesdits objets mis en place à l'étape a).

Diverses précisions doivent être apportées concernant les trois étapes principales indiquées ci-dessus.

Lesdites étapes a) et c) sont obligatoires, alors que ladite étape b) est facultative. Lesdites étapes a) et b) se déroulent de manière séparée, en ce qu'elles concernent respectivement ledit support adhésif et ledit tampon. Mais elles ne sont qu'éventuellement indépendantes en ce qui concerne respectivement leurs lieux, leurs moments, et les opérations complémentaires avec lesquelles elles peuvent être associées. Elles peuvent se dérouler en des lieux séparés ou non. Elles peuvent être antérieures l'une par rapport à l'autre, ou bien totalement ou partiellement simultanées. Mais elles sont toutes les deux obligatoirement antérieures à ladite étape c).

L'étape a) peut comporter une étape complémentaire a'), constituée d'opérations optionnelles et non exclusives, éventuellement complexes et/ou associées et/ou ordonnées, dans le temps et/ou dans l'espace. Ladite étape a') peut avoir, avec ladite étape a), les mêmes relations spatio-temporelles que ladite étape b), et elle est obligatoirement antérieure à ladite étape c). En ce qui concerne lesdites opérations optionnelles et non exclusives qui la constituent, ladite étape a') est particulièrement destinée à préparer, accompagner, et améliorer, la mise en place desdits objets. Mais elle doit être plus généralement comprise comme étant préparatoire de ladite étape c), pour le conditionnement desdits objets. En ce sens, ladite étape a') peut consister à faire intervenir lesdits moyens matériels accessoires, ou d'éventuels produits de traitement, solides, liquides, ou gazeux, ainsi qu'à effectuer tout type d'intervention nécessaire à la mise en œuvre de l'invention, sur lesdits objets, et sur lesdits constituants dudit dispositif conditionneur selon l'invention.

Il appartiendra à l'utilisateur de décider de la nature desdites opérations optionnelles et non exclusives en fonction des objectifs de la mise en œuvre de l'invention.

Pour la réalistion de ladite étape a) principale, consistant à mettre en place lesdits objets sur ledit support adhésif, il est possible de ne pas procéder par dépôt direct. On peut éventuellement utiliser le dispositif accessoire décrit ci-après, lequel sera revendiqué à titre de moyen particulier, spécialement destiné à la bonne mise en œuvre dudit procédé selon l'invention.

Ledit moyen particulier est un dispositif constitué, sous sa forme la plus générale, par un support comportant des alvéoles où sont temporairement déposés lesdits objets, pour y demeurer pendant un temps variable, de manière réversible et renouvelable, avant d'être transférés sur ledit support adhésif dans le cadre de ladite étape a) dudit procédé. Dans ses rapports avec ladite étape a), ledit moyen particulier, ci-après dénommé «support alvéolaire », est particulièrement destiné à donner une disposition précise auxdits objets, en position et en orientation, avant leur transfert sur ledit support adhésif. Pour cela, les alvéoles que comporte ledit support alvéolaire doivent avoir une forme et des dimensions identiques, ou similaires, à celles desdits objets.

Les propriétés attendues de la matière constitutive dudit support alvéolaire sont essentiellement la faible densité, la souplesse et, éventuellement, l'élasticité, de manière à ce qu'elle puisse épouser la forme desdits objets, par simple pression, sans dommages pour ceux-ci, s'il se trouve que lesdits objets sont fragiles, que ledit support alvéolaire doit être posé sur eux, et que la forme même desdites alvéoles n'assure pas, à elle seule, cette sécurité. Par exemple, ladite matière constitutive pourra être de type poreux (mousse de polyéthylène, de polyuréthane, ou d'autres polymères organiques), de type expansé (polystyrène par exemple), ou de type élastomère (silicones par exemple).

Dans ce cas, les procédés de fabrication pour la réalisation dudit support alvéolaire, à partir des matières précitées, sont bien connus de l'homme de l'art.

S'il se trouve que la forme desdites alvéoles peut être adaptée à celle desdits objets de telle sorte que lesdits objets soient préservés contre tout dommage mécanique inopportun, il appartiendra à l'homme de l'art de déterminer la nature et les caractéristiques de ladite matière constitutive en fonction d'autres critères relatifs à la bonne mise en œuvre de l'invention.

Eventuellement, la paroi desdites alvéoles peut être recouverte de matière adhésive à faible adhérence, ou comporter des aménagements morphologiques de détail, tels que des filaments courts et souples par exemple, pour améliorer le maintien provisoire desdits objets, en tirant profit de leurs propriétés superficielles, sans compromettre la réalisation de leur transfert sur ledit support adhésif.

Ledit support alvéolaire peut être libre, ou bien inclus dans un conteneur spécial, destiné à assurer sa protection, sa manipulation, ou de meilleures conditions pour le maintien provisoire et le transfert desdits objets.

Ledit transfert peut notamment se faire par réplique. Dans ce cas, ledit support alvéolaire et son éventuel conteneur peuvent porter des marques et/ou des moyens d'encastrement, coopérant avec ceux dudit dispositif conditionneur selon l'invention, pour faciliter l'assemblage des deux dispositifs, ou pour permettre la continuité du repérage desdits objets, compte tenu du fait que le transfert par réplique inverse la disposition desdits objets selon deux directions dans l'espace.

Il va de soi que toutes les caractéristiques dudit support alvéolaire doivent être compatibles avec celles desdits objets, et avec celles desdits constituants dudit dispositif conditionneur selon l'invention, notamment en cas de transfert par réplique. Il appartiendra à l'homme de l'art de déterminer la nature et les diverses caractéristiques dudit support alvéolaire, et de son éventuel conteneur, en fonction de la version concernée dudit procédé selon l'invention, et des objectifs particuliers de sa mise en œuvre.

Aux fins d'illustration exemplaire, l'invention va maintenant être décrite avec référence à la figure unique annexée qui représente schématiquement une des manières de la réaliser très simplement. Il s'agit en l'occurrence de l'une des variantes utilisables dans les essais de germination portant, par exemple, sur les semences d'un seul épi de blé ou d'orge, ou constituant un échantillon réduit.

Ledit support adhésif 1, muni d'une pellicule protectrice amovible 2, est réversiblement fixé dans le fond 3 d'une « boîte de Petri », face adhésive vers le haut, à l'aide de fragments de ruban adhésif-double face 4.

Ledit tampon 5 est réversiblement fixé dans le couvercle 6 de ladite « boîte de Petri », à l'aide d'autres fragments de ruban adhésif-double face 7. Le diamètre dudit tampon 5 est légèrement inférieur ou, de préférence, égal au diamètre interne du fond 3 de ladite « boîte de Petri », car il doit pouvoir s'y encastrer facilement, si possible sans laisser de jeu.

A l'étape a) dudit procédé, ladite pellicule protectrice 2 est séparée dudit support adhésif 1, puis lesdits objets 8 sont mis en place sur ledit support adhésif 1, directement ou, de préférence, à l'aide d'une variante dudit support alvéolaire, non représentée sur les dessins. Pour caractériser ladite variante, on peut dire qu'elle a sensiblement les mêmes caractéristiques géométriques générales que ledit tampon 5, lesdites alvéoles mises à part, et qu'elle est fixée de la même manière dans le couvercle d'une autre « boîte de Petri » semblable, afin de pouvoir s'encastrer comme lui dans le fond 3 de ladite « boîte de Petri ». Eventuellement, ledit support alvéolaire peut être réalisé de telle sorte qu'il puisse aussi servir dedit tampon 5.

A l'étape complémentaire a'), lesdites opérations optionnelles et non exclusives consistent à remettre temporairement ladite pellicule protectrice 2, à ajouter une quantité connue d'eau sur lesdits objets 8, pendant un temps déterminé, pour assurer leur trempage préalable, puis à vider complètement cette eau par simple retournement et secouage énergique dudit fond 3 de la « boîte de Petri ».

A l'étape b) dudit procédé, ledit tampon 5 est imprégné d'une quantité déterminée d'eau.

A l'étape c) dudit procédé, ledit tampon 5, fixé dans ledit couvercle 6 de la « boîte de Petri », et imprégné d'eau à l'étape b), est appliqué sur lesdits objets 8, fixés sur ledit support adhésif l à l'étape a), et trempés à l'étape a'), afin de fournir l'eau nécessaire à la germination et au développement ultérieur des jeunes plantes, lesdits objets 8 étant des semences végétales.

Il va de soi que l'invention ne saurait être limitée au mode de réalisation exemplaire spécifiquement décrit ci-dessus. L'homme de l'art pourra apporter toute modification nécessaire, sans pour autant sortir du cadre de l'invention.

L'étude de la germination de plus de 60 000 semences de blé, réparties dans plus de 1 000 prototypes dudit dispositif conditionneur selon l'invention, a permis de constater que les moyens fournis par ladite invention permettent de réaliser les objectifs qui leur ont été assignés, du moins dans ce secteur de la technique. Il s'est ainsi avéré que les semences de blé sont bien mais réversiblement fixées, correctement conditionnées, et accessibles en permanence à tout type d'intervention, de manière sûre, avec de nombreuses possibilités d'options non exclusives. Dans ledit secteur, la technique proposée est apparue comme étant précise, extensive, fiable, rapide, simple, adaptable, évolutive, et peu onéreuse dans ses versions de base.

Possibilités d'exploitation industrielle

Un autre avantage de la présente invention semble bien être la grande diversité de ses possibilités d'exploitation industrielle. Cette invention peut concerner, sous sa forme la plus générale :

d'autres problèmes fondamentaux ou appliqués que ceux qui ont été évoqués à titre exemplaire, relatifs à la conservation des semences, à leur germination, et au développement des jeunes plantes qui en dérivent, pour les semences de blé, d'autres céréales, ou d'autres plantes (des essais positifs ont été réalisés dans ce sens, notamment sur des semences d'orge) ;

d'autres objets végétaux pouvant être conservés, analysés, traités, ou distribués sous conditionnement, tels que des boutures, des greffons, des organes, des fragments d'organes, ou des tissus (des essais positifs ont été réalisés dans ce sens, notamment sur des boutures de plantes ornementales, et sur des germes de pomme de terre) ;

des objets animaux, tels que des pontes, des formes juvéniles, des organes, des fragments d'organes, ou des tissus ;

des objets microbiologiques, tels que des colonies de bactéries ou de levures, des thalles ou des fragments mycéliens, ou des cultures de cellules (des essais positifs ont été réalisés sur des échantillons microbiologiques prélevés sur des surfaces diverses, à l'aide dudit support alvéolaire faisant aussi office dedit tampon) ;

des objets minéraux, tels que des fragments de roches à conserver, analyser, ou traiter ;

des objets fabriqués à conserver, analyser, traiter, distribuer sous conditionnement.

Pour les divers objets cités ci-dessus, les branches d'activité pouvant être concernées par l'invention sont :

les recherches fondamentales ou appliquées ;

la pédagogie fondamentale ou professionnelle ;

la production industrielle ou agricole (essais de production, production, distribution sous conditionnement, normalisation, contrôle).

**Revendications**

1. Dispositif conditionneur d'objets variables, concernant notamment les semences, explants, embryons et microorganismes, en vue de permettre la conservation et/ou la transformation de ces objets dans un choix de conditions contrôlées et adaptées, comprenant un support (1) dont la surface comporte au moins un secteur adhésif susceptible de maintenir un ou des objets (8), et un complément matériel, au moins temporairement solide, qui permettent d'enclore au moins partiellement cet ou ces objets, caractérisé en ce que ledit complément comprend un tampon (5), principalement constitué d'au moins une partie qui est souple, capable d'épouser la forme des reliefs par simple application, susceptible de recevoir des éléments additifs en incorporation et/ou d'être imprégnée de liquide, même pendant l'utilisation avec des moyens permettant que cette partie du tampon (5), tout en restant distincte, demeure durablement mais réversiblement appliquée par une pression au moins temporaire en contiguïté directe ou indirecte contre au moins ledit secteur adhésif du support, sans une fixation directe permanente et indétachable, en vue de réunir un ensemble approprié de conditions topiques, physiques, chimiques et/ou biologiques pour chacun des objets, que ce soit en cours de fabrication, ou pour des utilisations.

2. Dispositif selon la revendication 1, caractérisé en ce qu'il comporte ou porte au moins momentanément un ou plusieurs objets (8) qui sont susceptibles de subir des modifications et se trouvent retenus par le support et situés contre le tampon.

3. Dispositif suivant l'une quelconque des revendications 1 et 2, caractérisé en ce que le support et/ou le tampon sont en partie ou totalement stratifiés, performés et/ou répartis en supports et/ou tampons élémentaires, formant un système adapté aux besoins, par exemple une alternance de supports et tampons élémentaires ayant chacun plusieurs faces aptes à fonctionner.

4. Dispositif suivant l'une quelconque des revendications 1 à 3, caractérisé en ce que le support et/ou le tampon sont au moins localement consolidés par une infrastructure, entière ou divisée, qui porte ou renforce leurs matières essentielles.

5. Dispositif selon la revendication 4, caractérisé en ce que le tampon est consolidé par une infrastructure réalisée de façon qu'elle puisse aussi garder en réserve et/ou distribuer au moins un agent de conditionnement prévu, par exemple l'eau.

6. Dispositif suivant l'une quelconque des revendications 1 à 5, caractérisé en ce que le support et/ou le tampon sont au moins localement perméables à un ou des facteurs déterminés tels que, par exemple, l'eau, l'air, la lumière et similaires.

7. Dispositif suivant l'une quelconque des revendications 1 à 6, caractérisé en ce que le support et/ou le tampon sont chargés et/ou imprégnés avec un ou plusieurs éléments additifs sélectionnés parmi des matières et/ou des particules définies, par exemple comme des matières nutritives avec des produits de traitement, présents sous forme solide, liquide et/ou gazeuse.

8. Dispositif suivant l'une quelconque des revendications 1 à 7, caractérisé en ce que le support et/ou le tampon sont au moins partiellement constitués avec de la substance soluble ou, au moins, susceptible d'une désintégration, par exemple en présence de l'eau, de ses associations ou facteurs similaires.

9. Dispositif suivant l'une quelconque des revendications 1 à 8, caractérisé en ce que le support et/ou le tampon sont au moins momentanément munis d'une protection amovible (2, 10), entière ou divisée, pour maîtriser leurs contacts et échanges, par exemple des pellicules couvrant localement leurs surfaces.

10. Dispositif suivant l'une quelconque des revendications 1 à 9, caractérisé en ce qu'il comporte au moins momentanément de la substance formant un joint (9), disposable en contiguïté directe ou indirecte avec le tampon (5) et avec le support (1) et/ou au moins un objet (8), par exemple une couche poreuse ou capillaire, imprégnée de substance pour analyse ou traitement.

11. Dispositif suivant l'une quelconque des revendications 1 à 10, caractérisé en ce qu'il comprend en outre un conteneur spécial (3, 6), à l'intérieur duquel les autres composants sont au moins partiellement, localement et temporairement disposés, ce conteneur étant conçu comme un constituant global, à savoir qu'il est constitué avec un ou divers conteneurs élémentaires, réalisés en une ou plusieurs parties de manière à former un ou plusieurs compartiments, et combinés en un ou plusieurs blocs.

12. Dispositif selon la revendication 11, caractérisé en ce que ledit conteneur spécial (3, 6) est un conteneur élémentaire qui comprend au moins une partie-loge (3 ou 6) et au moins une partie-opercule (6 ou 3) constituant au moins un compartiment.

13. Dispositif suivant l'une quelconque des revendications 11 et 12, caractérisé en ce que ledit conteneur spécial (3, 6), élémentaire ou complexe, comporte un ou des composants annexes adaptables avec ses parois, de façon à réaliser des conditions particulières, par exemple des caractères de lumière modifiés.

14. Dispositif suivant l'une quelconque des revendications 11 à 13, caractérisé en ce que le support et/ou le tampon sont au moins momentanément reliés à la face interne d'un conteneur élémentaire avec un ou des moyens de fixation réversible (4, 7) tels que des éléments adhésifs, ou de serrage comme des clips.

15. Dispositif suivant l'une quelconque des revendications 1 à 14, caractérisé en ce qu'il comporte en outre un ou divers moyens de repérage (11), tels que des marques imprimées ou des reliefs encastrables, afin qu'il soit possible de contrôler et de stabiliser la disposition relative des divers constituants.

16. Dispositif suivant l'une quelconque des revendications 1 à 15, caractérisé en ce qu'au moins une partie d'au moins un des objets variables (8) est un élément biologique susceptible d'assurer la propagation ou un système vivant qui en provient.

17. Dispositif selon la revendication 16, caractérisé en ce que ledit élément biologique est de nature végétale, notamment tel que graine, embryon, organe, bourgeon, méristème, cellule.

18. Procédé de conditionnement d'objets variables, relatif notamment aux semences, explants, embryons et microorganismes, en vue de permettre la conservation et/ou la transformation de ces objets dans un choix de conditions contrôlées et adaptées, comprenant la fourniture d'un support dont la surface présente un ou des secteurs adhésifs, aptes à retenir un ou des objets, la fourniture simultanée ou indépendante d'un matériel solide, ayant une ou des aires aptes à être placées contre ces objets, la réalisation d'une adhérence au moins temporaire, suivant un ordre déterminé, entre un ou plusieurs desdits objets et un ou plusieurs desdits secteurs dudit support, et la réalisation au besoin différée d'une opération telle qu'une ou plusieurs desdites aires dudit matériel soient au moins momentanément mises contre un ou plusieurs desdits objets, adhérant au support, et de manière à enclore au moins partiellement cet ou ces objets, caractérisé en ce que ledit matériel solide comprend un tampon comportant principalement une ou des parties qui sont souples, aptes à épouser la forme de reliefs par simple application, et pouvant recevoir un ou des éléments additifs par incorporation et/ou être imprégnées de liquide, même en cours d'utilisation, et en ce que ladite opération consiste notamment à rapprocher au moins une dite partie du tampon d'au moins undit secteur du support, auquel adhèrent un ou plusieurs desdits objets, et à l'appliquer par une pression au moins temporaire en contiguïté directe ou indirecte contre ce secteur et ces objets, de façon qu'il y reste durablement mais réversiblement appliqué tout en restant distinct, sans liaison directe permanente et indétachable, afin de réunir un ensemble adapté de conditions topiques, physiques, chimiques et/ou biologiques pour chacun des objets, que ce soit en cours de fabrication, ou pour des utilisations.

19. Procédé suivant la revendication 18, caractérisé en ce qu'il comprend de plus la soumission de la ou desdites parties constituant ledit tampon à un ou des agents de conditionnement appropriés, notamment tels que l'eau ou un fluide similaire, à un ou des moments déterminés, même en processus d'utilisation, de telle sorte que ces agents y pénètrent au moins localement.

20. Procédé conforme à l'une quelconque des revendications 18 à 19, caractérisé en ce qu'il comprend de plus ce qui suit :

la fourniture d'un moyen de transfert, susceptible de porter un ou plusieurs desdits objets selon un arrangement déterminé, dans au moins un secteur porteur de sa surface, et ensuite de le ou les transmettre, de façon séparée ou groupée, à au moins undit secteur adhésif, appartenant à la surface dudit support ;

la mise en relation d'un ou plusieurs desdits objets avec au moins undit secteur porteur, situé à la surface dudit moyen de transfert de sorte que tout ou partie d'entre eux y soient mis en une fois ou successivement, de façon séparée ou groupée, et y demeurent temporairement, selon un arrangement déterminé ; et

la mise en relation d'au moins undit secteur porteur, situé à la surface dudit moyen de transfert et portant momentanément un ou plusieurs desdits objets, avec au moins undit secteur adhésif appartenant à la surface dudit support, notamment comme en les confrontant par pression, pendant un ou plusieurs temps déterminés, de façon que tout ou partie des objets qui restent portés à la surface dudit moyen de transfert soient retransmis audit support, en une fois ou successivement, de façon séparée ou groupée, et y restent au moins temporairement fixés suivant un arrangement déterminé, afin d'y être soumis à undit tampon.

21. Procédé suivant la revendication 20, caractérisé en ce que ledit moyen de transfert mis en œuvre est principalement un support qui est pourvu d'un ou plusieurs alvéoles, disposés avec un arrangement déterminé dans au moins un secteur porteur de sa surface, et ayant des traits géométriques si nécessaire conformes à ceux desdits objets, de sorte que ceux-ci puissent y être logés sans dommage inopportun et y rester momentanément immobilisés pendant une ou des périodes définies, avant d'être transmis par réplique à un support ayant une surface adhésive.

22. Procédé suivant la revendication 21, caractérisé en ce que ledit support alvéolé comporte au moins un matériau souple qui est en outre peu dense, si nécessaire élastique à l'égard desdits objets, et sélectionné parmi les matériaux comprenant notamment les mousses, en exemple les mousses de polyéthylène, polyuréthane ou autres polymères, le polystyrène, les polymères tels que les élastomères des silicones, et de leurs combinaisons.

23. Procédé conforme à l'une quelconque des revendications 21 et 22, caractérisé en ce que le ou lesdits alvéoles sont au moins en partie pourvus d'un moyen de maintien, susceptible de retenir réversiblement un ou plusieurs desdits objets qui sont mis à son contact, en fonction des propriétés de leur surface, ce moyen de maintien étant par exemple une ou des matières qui sont capables de les retenir à l'aide d'une adhésivité faible.

24. Procédé conforme à l'une quelconque des revendications 21 à 23, caractérisé en ce que le moyen de transfert comprend un conteneur à au moins un élément et au moins un compartiment de sorte que ledit support alvéolé puisse y être fonctionnel.

25. Procédé suivant la revendication 24, caractérisé en ce que ledit conteneur est réalisé de sorte qu'il soit compatible avec le ou les éléments auxquels ledit support alvéolé doit se trouver combiné, notamment s'ils sont aussi dans un conteneur.

## Claims

1. A conditioning device for variable objects, including, in particular, seeds, cuttings, embryos, and micro-organisms, so as to allow the preservation and/or transformation of those objects under a selection of supervised and adapted conditions, which comprises a support (1), the surface of which has at least one adhesive area able to retain one or several objects (8), and a co-operative means, at least provisionally solid, which enable to enclose at least partially said one or several objects, characterized in that said co-operative means comprises a pad (5), basically comprised of at least one supple part, able to fit the shape of reliefs by mere application, and capable of having additive elements incorporated therein and/or of being impregnated with liquid, even during its use, and means allowing that said part of the pad (5), while keeping distinct, remains durably yet reversibly applied under at least a temporary pressure in direct or indirect contiguity against at least said adhesive area of the support, without any direct, permanent and unremovable bond, in order to apply an appropriate set of topical, physico-chemical and/or biological conditions to each of the objects, whether in the course of manufacture or for applications.

2. A device as claimed in claim 1, characterized in that it comprises, or carries at least momentarily, one or several objects (8) which are capable of undergoing modifications and which are retained by the support and located against the pad.

3. A device as claimed in any of claims 1 and 2, characterized in that the support and/or the pad are partially or totally laminated, perforated and/or divided into elementary supports and/or pads, forming a system suited to the needs, for example an alternation of elementary supports and pads having each several faces capable of working.

4. A device as claimed in any of claims 1 to 3, characterized in that the support and/or the pad are at least locally made firmer by means of an entire or divided substructure which carries or strengthens the essential substances thereof.

5. A device as claimed in claim 4, characterized in that the pad is made firmer by a substructure so made that it can keep also in reserve and/or dispense at least one desired conditioning agent, for example water.

6. A device as claimed in any of claims 1 to 5, characterized in that the support and/or the pad are at least locally permeable to one or more determined factors such as, for instance, water, air, light, and the like.

7. A device as claimed in any of claims 1 to 6, characterized in that the support and/or the pad are filled and/or impregnated with one or more additive elements, selected among definite substances and/or particles, for instance nutriments with treatment products, present in solid, liquid and/or gaseous form.

8. A device as claimed in any of claims 1 to 7, characterized in that the support and/or the pad are at least partially comprised of materials which are soluble or, at the least, susceptible to disintegration, for instance in presence of water, of its associations or similar factors.

9. A device as claimed in any of claims 1 to 8, characterized in that the support and/or the pad are equipped, at least momentarily, with removable protective means (2, 10), in entire or divided form, in order to control their contacts and exchanges, for instance films covering locally their surfaces.

10. A device as claimed in any of claims 1 to 9, characterized in that it further comprises, at least momentarily, a joint-forming material (9) which can be located in direct or indirect contiguity with the pad (5) and with the support (1) and/or with at least one object (8), for example a porous or capillary layer impregnated with analysis or treatment material.

11. A device as claimed in any of claims 1 to 10, characterized in that it further comprises a special container (3, 6), within which the other components are at least partially, locally, and temporarily arranged, said container being designed as a total component, i.e. said container is comprised of one or various elementary containers which are made of one or several parts, so as to form one or several compartments, and combined in one or several units.

12. A device as claimed in claim 11, characterized in that said special container (3, 6) is an elementary container comprising at least one chamber part (3 or 6) and at least one lid part (6 or 3) that form together at least one compartment.

13. A device as claimed in any of claims 11 and 12, characterized in that said special container (3, 6), either elementary or complex, comprises furthermore one or several annex components adjustable to its walls, so as to achieve specific conditions, for instance, modified light characteristics.

14. A device as claimed in any of claims 11 to 13, characterized in that the support and/or the pad are at least momentarily attached to the inner side of an elementary container by means of one or several removable fastening means (4, 7) such as, for example, adhesive means or clamping means such as clips.

15. A device as claimed in any of claims 1 to 14, characterized in that it further comprises one or diverse marking means (11), such as printed marks or embeddable reliefs, so as to allow to check and to stabilize the relative arrangement of the various constituents.

16. A device as claimed in any of claims 1 to 15, characterized in that at least a part of a least one of said variable objects (8) is a biological element likely to take part in the life propagation or a live system issued from such an element.

17. A device as claimed in claim 16, characterized in that said biological element is of vegetal kind, such as a seed, embryo, organ, bud, meristem or cell.

18. A process for conditioning variable objects, including in particular seeds, cuttings, embryos, and micro-organisms, so as to allow the preservation and/or transformation of those objects under a selection of supervised and adapted conditions, which comprises the steps of providing a support the surface of which has one or more adhesive areas able to retain one or more objects ; providing simultaneously or separately a solid material having one or more areas able to be placed against these objects ; achieving an at least temporary adhesion, according to a determined order, between one or several of said objects and one or several of said support areas ; and carrying out an operation, possibly delayed if needed, such that one or more of said material areas be, at least momentarily, placed against one or more of said objects, which adhere to the support, so as to enclose at least partially this or these objects, characterized in that said solid material comprises a pad essentially comprised of one or several supple parts, able to fit the shape of reliefs by mere application, and capable of having additive elements incorporated therein and/or of being impregnated with liquid, even during its use ; and in that said operation includes bringing at least one of said parts of the pad closer to at least one of said support areas, to which one or several of said objects adhere, and applying the same by at least a temporary pressure in direct or indirect contiguity against this area and these objects, so that it remains durably yet reversibly applied there while keeping distinct, without any direct, permanent and unremovable bond, in order to apply an appropriate set of topical, physico-chemical and/or biological conditions to each of the objects, whether in the course of manufacture or for applications.

19. A process as claimed in claim 18, characterized in that it comprises the further step of subjecting said one or several parts, forming said pad, to one or more suitable conditioning agents, such as water or a similar fluid, at one or more determined moments, even in the process of use, so that said agents chould enter therein at least locally.

20. A process as claimed in any of claims 18-19, characterized in that it further comprises the following steps :

providing transfer means, capable of carrying one or several of said objects in a determined arrangement, in at least one carrying area of their surface and, then, of transmitting it or them, in a separate or grouped mode, to at least one of said adhesive areas on the surface on the support :

bringing one or several of said objects in relation with at least one said carrying area, situated at the surface of said transfer means, so that all or part of them should be put there in one shot or sequentially, in a separate or grouped form, and stay provisionally there in a determined order ; and

bringing at least one of said carrying areas, situated at the surface of the said transfer means and carrying temporarily one or several of said objects, in relation with at least one of said adhesive areas provided on the surface of the support, especially by pressing them one against the other, during one or several determined times, so that all or part of said objects remaining on the surface of said transfer means should be transferred to said support, in one shot or sequentially, in a separate or grouped form, and stay at least temporarily held there in a defined arrangement, to be subjected there to one said pad.

21. A process as claimed in claim 20, characterized in that said transfer means is chiefly comprised of a support provided with one or more alveoles or cells, placed in a determined arranged in at least one carrying area of its surface and having geometric features fitted, if needed, to those of said objects, so that the latters can be housed therein without any inopportune damage and remain there momentarily secured during one or more defined periods, before being transferred by contact to an adhesive support.

22. A process as claimed in claim 21, characterized in that the alveolate support includes at least one low-density supple material, if necessary resilient towards said objects, and selected among the materials comprising particularly foams, for example, foams of polyethylene, polyurethane, other polymers, polystyrene, polymers like silicone elastomers, and combinations thereof.

23. A process as claimed in any of claims 21-22, characterized in that said one or more alveoles or cells are provided at least partially with holding means, capable of retaining reversibly one or several of said objects contacted therewith, depending on the properties of their surface, said holding means being, for example, one or more materials able to retain them by means of a weak adhesivity.

24. A process as claimed in any of claims 21-23, characterized in that said transfer means comprise also a container made of at least one element and having at least one compartment, so that the alveolate support can be operative therein.

25. A process as claimed in claim 24, characterized in that said container is made so as to be compatible with the element(s) with which the alveolate support has to be combined, especially if they too are in a container.

**Patentansprüche**

1. Konditioniervorrichtung für veränderliche Objekte, insbesondere für Samen, Explantate, Embryonen und Mikroorganismen, mit dem Ziel der Ermöglichung der Konservierung und/oder Umwandlung dieser Objekte unter ausgewählten überwachten udn angepassten Bedingungen, umfassend einen Träger (1), deren Oberfläche wenigstens eine klebende Zone, der ein oder mehrere Objekte (8) festzuhalten vermag, und ein wenigstens vorübergehend festes Ergänzungsmaterial aufweist, das eines oder mehrere dieser Objekte wenigstens teilweise einzuschließen vermag, dadurch gekennzeichnet, daß das genannte Ergänzungsmaterial einen Puffer (5) umfasst, der hauptsächlich aus wenigstens einem Teil besteht, der weich ist, die Form von Reliefs durch einfaches Auflegen anzunehmen vermag, Zusatzstoffe durch Einverleibung aufnehmen und/oder mit Flüssigkeit selbst während der Verwendung imprägniert werden kann, mit Mitteln, die es ermöglichen, daß dieser Teil des Puffers (5), während er klar und scharf abgegrenzt bleibt, dauerhaft, aber reversibel durch einen wenigstens vorübergehenden Druck ständig direkt oder indirekt gegen wenigstens die klebende Zone des Trägers ohne direkte endgültige und unlösbare Befestigung angelegt bleibt, mit dem Ziel, eine geeignete Gesamtheit von örtlichen, physikalischen, chemischen und/oder biologischen Bedingungen für jedes der Objekte zu vereinigen, gleichgültig, ob dies während der Herstellung oder für die Verwendungen ist.

2. Vorrichtung nach Anspruch 1, dadurch gekennzeichnet, daß sie wenigstens augenblicklich ein oder mehrere Objekte (8) enthält oder trägt, die Modifikationen zu erfahren vermögen und von dem Träger festgehalten und gegen den Puffer gelegt werden.

3. Vorrichtung nach irgendeinem der Ansprüche 1 und 2, dadurch gekennzeichnet, daß der Träger und/oder der Puffer teilweise oder vollständig mehrschichtig, perforiert und/oder in Trägern und/oder Einzelpuffern verteilt sind, wobei sie ein den Notwendigkeiten angepaßtes System, beispielsweise eine Anordnung von abwechselnden Trägern und Einzelpuffern bilden, von denen jeder mehrere funktionsfähige Seiten aufweist.

4. Vorrichtung nach irgendeinem der Ansprüche 1 bis 3, dadurch gekennzeichnet, daß der Träger und/oder der Puffer wenigstens örtlich durch einen ganzen oder geteilten Unterbau gesichert sind, der ihre wesentlichen Materialien trägt oder verstärkt.

5. Vorrichtung nach Anspruch 4, dadurch gekennzeichnet, daß der Puffer durch einen Unterbau gesichert ist, der so ausgeführt ist, daß er wenigstens ein vorgesehenes Konditioniermittel, beispielsweise Wasser, sowohl in Reserve zu halten und/oder zu verteilen vermag.

6. Vorrichtung nach irgendeinem der Ansprüche 1 bis 5, dadurch gekennzeichnet, daß der Träger und/oder der Puffer wenigstens örtlich für einen oder mehrere bestimmte Faktoren, beispielsweise Wasser, Luft, Licht oder ähnliche, durchlässig oder durchdringbar sind.

7. Vorrichtung nach irgendeinem der Ansprüche 1 bis 6, dadurch gekennzeichnet, daß der Träger und/oder der Puffer mit einem oder mehreren Zusatzelementen, ausgewählt aus definierten Materialien und/oder Teilchen wie beispielsweise Nährstoffen mit Behandlungsprodukten, die in fester, flüssiger und/oder gasförmiger Form vorliegen, beladen und/oder imprägniert sind.

8. Vorrichtung nach irgendeinem der Ansprüche 1 bis 7, dadurch gekennzeichnet, daß der Träger und/oder der Puffer wenigstens teilweise mit einer Substanz gebildet sind, die löslich oder beispielsweise in Gegenwart von Wasser, seinen Verbindungen oder ähnlichen Faktoren wenigstens zu einem Zerfall oder einer Auflösung fähig ist.

9. Vorrichtung nach irgendeinem der Ansprüche 1 bis 8, dadurch gekennzeichnet, daß der Träger und/oder der Puffer wenigstens vorübergehend mit einem ganzen oder geteilten entfernbaren Schutz (2,10) zur Lenkung ihrer Kontakte und Austauschvorgänge, beispielsweise mit Überzügen, die ihre Oberflächen örtlich bedecken, versehen sind.

10. Vorrichtung nach irgendeinem der Ansprüche 1 bis 9, dadurch gekennzeichnet, daß sie wenigstens vorübergehend eine ein Dichtungsmaterial (9) bildende Substanz, die direkt oder indirekt angrenzend an den Puffer (5) und an den Träger (1) und/oder wenigstens ein Objekt (8) angeordnet werden kann, beispielsweise eine poröse oder kapillare Schicht, die mit einer Substanz für die Analyse oder die Behandlung imprägniert ist, aufweist.

11. Vorrichtung nach irgendeinem der Ansprüche 1 bis 10, dadurch gekennzeichnet, daß sie außerdem einen Spezialbehälter (3, 6) aufweist, in dessen Innerem die anderen Bestandteile wenigstens teilweise, örtlich und vorübergehend angeordnet sind, wobei dieser Behälter als Gesamtbestandteil ausgebildet ist, d. h. daß er aus einem oder verschiedenen Einzelbehältern gebildet ist, die in einem Teil oder in mehreren Teilen so ausgebildet sind, daß sie einen oder mehrere Räume bilden, und zu einem oder mehreren Blöcken kombiniert sind.

12. Vorrichtung nach Anspruch 11, dadurch gekennzeichnet, daß der Spezialbehälter(3, 6) ein Grundbehälter ist, der wenigstens einen unteren Teil (3 oder 6) und wenigstens einen Deckelteil (6 oder 3) aufweist, die wenigstens einen Raum bilden.

13. Vorrichtung nach irgendeinem der Ansprüche 11 und 12, dadurch gekennzeichnet, daß der einteilige oder mehrteilige Spezialbehälter (3, 6) einen oder mehrere Anbauteile aufweist, die an seine Wände so anpassungsfähig sind, daß besondere Bedingungen, beispielsweise Zeichen aus modifiziertem Licht, geschaffen werden.

14. Vorrichtung nach irgendeinem der Ansprüche 11 bis 13, dadurch gekennzeichnet, daß der Träger und/oder der Puffer wenigstens vorübergehend mit der Innenseite eines Grundbehälters mit einem oder mehreren reversiblen Befestigungsmitteln (4, 7) wie Klebstoffen oder Spannvorrichtungen, wie Klemmen, verbunden sind.

15. Vorrichtung nach irgendeinem der Ansprüche 1 bis 14, dadurch gekennzeichnet, daß sie außerdem ein oder verschiedene Markierungsmittel (11) wie beispielsweise aufgedruckte Zeichen oder eingelassene Reliefs aufweist, damit es möglich ist, die relative Anordnung der verschiedenen Bestandteile zu steuern und zu stabilisieren.

16. Vorrichtung nach irgendeinem der Ansprüche 1 bis 15, dadurch gekennzeichnet, daß wenigstens ein Teil wenigstens eines der veränderlicher Objekte (8) ein biologisches Element ist, das die Fortpflanzung oder ein davon herrührendes lebendes System sicherzustellen vermag.

17. Vorrichtung nach Anspruch 16, dadurch gekennzeichnet, daß das genannte biologische Element von vegetabilischer Natur, insbesondere ein Samenkorn, ein Embryo, ein Organ, eine Knospe, ein Meristem oder eine Zelle ist.

18. Verfahren zur Konditionierung veränderlicher Objekte, insbesondere Samen, Explantaten, Embryonen und Mikroorganismen, mit dem Ziel, die Konservierung und/oder die Umwandlung dieser Objekte unter ausgewählten überwachten und angepaßten Bedingungen zu ermöglichen, umfassend die Verfügbarmachung eines Trägers, dessen Oberfläche eine oder mehrere klebende Zonen aufweist, die ein oder mehrere Objekte festzuhalten vermögen, die gleichzeitige oder unabhängige Verfügbarmachung eines Feststoffs mit einer oder mehreren Flächen, die gegen diese Objekte gelegt werden können, die Verwirklichung einer wenigstens vorübergehenden Haftung nach einer bestimmten Reihenfolge zwischen einem oder mehreren der genannten Objekte und einem oder mehreren der genannten Abschnitte des Trägers und die nach Bedarf differierende Durchführung eines Arbeitsgangs, bei dem beispielsweise eine oder mehrere der genannten Flächen des genannten Materials wenigstens vorübergehend gegen eines oder mehrere der an dem Träger haftenden Objekte gelegt werden, und in einer Weise, daß dieses Objekt oder diese Objekte wenigstens teilweise eingeschlossen werden, dadurch gekennzeichnet, daß der genannte Feststoff einen Puffer umfaßt, der hauptsächlich einen oder mehrere Teile aufweist, die weich sind und die Form von Reliefs durch einfaches Auflegen anzunehmen vermögen und selbst im Verlauf der Verwendung ein oder mehrere Zusatzelemente durch Einarbeitung annehmen und/oder mit Flüssigkeit imprägniert werden können, und daß der genannte Arbeitsgang insbesondere darin besteht, daß wenigstens einer der genannten Teile des Puffers wenigstens einem der genannten Zonen des Trägers, an dem ein oder mehrere der genannten Objekte haften, genähert und dieser Teil durch einen wenigstens vorübergehenden Druck direkt oder indirekt gegen diese Zone und diese Objekte so gelegt wird, daß er dort dauerhaft, aber reversibel unter Aufrechterhaltung seiner scharf abgegrenzten Beschaffenheit und ohne direkte endgültige und unlösbare Bindung angelegt bleibt, um eine angepaßte Gesamtheit von örtlichen, physikalischen, chemischen und/oder biologischen Bedingungen für jedes der Objekte zu vereinigen, gleichgültig, ob dies während der Herstellung oder für die Verwendungen geschieht.

19. Verfahren nach Anspruch 18, ferner dadurch gekennzeichnet, daß man die genannten Teile, die den Puffer bilden, einem oder mehreren geeigneten Konditioniermitteln, insbesondere Wasser oder einem ähnlichen Fluid, in einem oder mehreren bestimmten Augenblicken selbst beim Prozeß der Verwendung so aussetzt, daß diese Mittel wenigstens örtlich darin eindringen.

20. Verfahren nach irgendeinem der Ansprüche 18 und 19, dadurch gekennzeichnet, daß es außerdem das Folgende umfaßt :

Lieferung eines Überführungsmittels, das ein oder mehrere der genannten Objekte nach einer bestimmten Anordnung in wenigstens einem tragenden Zone ihrer Oberfläche zu tragen und es oder sie anschließend getrennt oder gruppenweise zu wenigstens einer klebender Zone, der zur Oberfläche des Trägers gehört, zu überführen vermag ;

die Inbeziehungbringung eines oder mehrerer der genannten Objekte mit wenigstens einer tragender Zone, der an der Oberfläche des Überführungsmittels liegt, in einer solchen Weise, daß alle oder ein Teil von ihren auf einmal oder nacheinander in getrennter Weise oder gruppenweise darauf abgesetzt werden und dort vorübergehend nach einer bestimmten Anordnung bleiben ; und

die Inbeziehungbringung wenigstens eines der tragender Zonen, die an der Oberfläche des Überführungsmittels liegen und augenblicklich ein oder mehrere Objekte tragen, mit wenigstens einem der zur Oberfläche des Trägers gehörenden klebenden Zonen, insbesondere beispielsweise durch ihre Gegenüberstellung durch Druck während einer oder mehrerer bestimmter Zeiten in einer solchen Weise, daß alle oder ein Teil der Objekte, die weiterhin an der Oberfläche des Übertragungsmittels getragen bleiben, erneut zum Träger auf einmal oder nacheinander getrennt oder gruppenweise geführt werden und dort wenigstens vorübergehend nach einer bestimmten Anordnung festgelegt bleiben, um dort einem Puffer ausgesetzt zu werden.

21. Verfahren nach Anspruch 20, dadurch gekennzeichnet, daß das eingesetzte Übertragungsmittel hauptsächlich ein Träger ist, der mit einer oder mehreren Zellen versehen ist, die in bestimmter Anordnung in wenigstens einer tragender Zone seiner Oberfläche angeordnet sind und, falls erforderlich, eine derjenigen der genannten Objekte angepaßte geometrische Ausbildung derart haben, daß die letzteren ohne unerwünschten Schaden darin untergebracht werden können und darin vorübergehend während einer oder mehrerer definierter Zeiträume unbeweglich bleiben, bevor sie durch Wiederholung auf einen Träger mit klebender Oberfläche überführt werden.

22. Verfahren nach Anspruch 21, dadurch gekennzeichnet, daß der mit Zellen versehene Träger wenigstens ein weiches Material enthält, das außerdem wenig dicht ist und, falls erforderlich, elastisch gegenüber den genannten Objekten und aus den Materialien ausgewählt ist, die insbesondere Schaumstoffe, beispielsweise Schaumstoffe von Polyethylen, Polyurethan oder anderen Polymerisaten, Polystyrol, die Polymeren wie die Elastomeren von Siliconen und ihre Kombinationen umfassen.

23. Verfahren nach irgendeinem der Ansprüche 21 und 22, dadurch gekennzeichnet, daß die Zelle oder die Zellen wenigstens zum Teil mit einem Festhaltemittel versehen sind, das ein oder mehrere der genannten Objekte, die damit in Berührung sind, in Abhängigkeit von den Eigenschaften ihrer Oberfläche reversibel festzuhalten vermag, wobei dieses Festhaltemittel beispielsweise aus einem oder mehreren Materialien besteht, die sie mit Hilfe eines geringen Adhäsionsvermögens zurückzuhalten vermögen.

24. Verfahren nach irgendeinem der Ansprüche 21 bis 23, dadurch gekennzeichnet, daß das Übertragungsmittel einen Behälter an wenigstens einem Bauteil und wenigstens ein Fach derart enthält, daß der genannte Träger, der mit Zellen versehen ist, damit funktionell sein kann.

25. Verfahren nach Anspruch 24, dadurch gekennzeichnet, daß der genannte Behälter derart verwirklicht ist, daß er mit dem oder den Bauteilen und Bestandteilen, mit denen der mit Zellen versehene Träger in Kombination kommen soll, verträglich ist, besonders wenn diese sich ebenfalls in einem Behälter befinden.